# EUROPEAN PATENT APPLICATION

(11) **EP 2 738 245 A1**
(43) Date of publication of application: **04.06.2014**
(21) Application number: 13195571.8
(22) Date of filing: 03.12.2013
(51) Int. Cl.: C11C 3/14, A23D 9/04

(54) **Conjugated linoleic acid rich vegetable oil production from linoleic rich oils by heterogeneous catalysis**

(30) Priority: 03.12.2012 US 201213692619; 08.02.2013 US 201361762678 P
(71) Applicant: Board of Trustees of University of Arkansas, Fayetteville, AR 72701 (US)
(72) Inventor: Proctor, Andrew, Arkansas, 72701 (US); Shah, Utkarsh, Arkansas, 72701 (US)
(74) Representative: Corbyn, David Jonathan

(57) **Abstract**

The invention is generally directed to conjugated linoleic acid (CLA)-rich vegetable oil production from linoleic rich oils by heterogeneous catalysis. A heterogeneous catalytic vacuum distillation process is used under high temperature conditions to isomerize linoleic acid in triacylglyceride vegetable oils to CLA to produce CLA-rich oils. After processing, the catalyst may be removed by filtration or centrifugation to obtain high quality, CLA-rich oils. The CLA-rich oils may then serve as a potent and bioactive nutraceutical and can be incorporated into various food products, such as a CLA-rich dressing, margarine or chips.

## Description

### CROSS REFERENCE TO RELATED APPLICATIONS

Not Applicable.

### STATEMENT REGARDING FEDERALLY SPONSORED RESEARCH OR DEVELOPMENT

Not Applicable.

### BACKGROUND OF THE INVENTION

### 1. Field of the Invention.

This invention relates generally to conjugated linoleic acid (CLA)-rich vegetable oil production from linoleic rich oils by heterogeneous catalysis, and in particular to a process for producing CLA-rich oil by isomerizing linoleic acid in triacylglyceride vegetable oils to CLA by low pressure/high temperature catalysis.

### 2. Description of the Related Art.

CLA is a group of positional and geometric isomers of octadecadienoic acid with conjugated double bonds. CLA has anti-carcinogenic, anti-atherogenic, anti-diabetic and anti-obesity properties, along with the ability to increase lean body mass and to protect against immune induced body wasting disease, chronic inflammatory disease, cancer and to provide other positive health effects.

CLA is found naturally in dairy and beef products at levels of approximately 0.3-0.8% (w/w) of the fat as bovine rumen fermentation products. The current human intake of CLA is, however, approximately ten (10) times less than the 3g/day minimum value recommended as being necessary to produce desirable physiological health effects. Obtaining the estimated optimum dietary CLA levels from natural beef and dairy sources would increase the total fat and saturated fat intake and increase the negative health risks associated with dietary animal fats. Therefore, a concentrated source of dietary CLA that is low in saturated fat and cholesterol is desirable.

Soy oil is the most commonly used vegetable oil in United States, and it contains about 50% linoleic acid. Other vegetable oils high in linoleic acid include sunflower (57%), corn (55%), cottonseed (50%) and peanut (50%). CLA fatty acid has been produced historically by fermentation and enzyme technology. CLA in vegetable oil has also been produced by converting linoleic acid to CLA using iodine by homogeneous photo-catalysis. A drawback of this process is the removal of iodine in order for the resulting CLA-rich oil to be suitable for human consumption.

It is therefore desirable to provide CLA-rich vegetable oil produced from linoleic rich oils using heterogeneous catalysis.

It is further desirable to provide a process for producing CLA-rich oil by isomerization of linoleic acid in triacylglyceride vegetable oils to CLA using low pressure/high temperature catalysis.

It is still further desirable to provide a process for producing a 20% CLA-rich oil that requires only post-processing catalyst removal.

It is yet further desirable to provide a process for rapidly producing CLA-rich oils from linoleic rich oils using heterogeneous catalysis that may utilize a continuous fixed bed reactor and/or a continuous stirred tank reactor for a cost effective and energy efficient process.

It is yet further desirable to provide a process for producing CLA-rich oils from linoleic rich oils using heterogeneous catalysis that is an environmentally-friendly process in contrast to alkali isomerization.

It is still further desirable to provide a process for producing CLA-rich oils from linoleic rich oils using heterogeneous catalysis that does not require any solvent or any chemical other than catalyst.

It is yet further desirable to provide a process for producing CLA-rich oils from linoleic rich oils using heterogeneous catalysis in the absence of iodine and with a metal catalyst that can be easily removed and reused.

It is yet further desirable to provide a process for producing CLA-rich oils from linoleic rich oils using heterogeneous catalysis that utilizes continuous steam injection to remove any rancidity volatiles in linoleic acid-rich oil.

### BRIEF SUMMARY OF THE INVENTION

In general, in a first aspect, the invention relates to a process for producing conjugated linoleic acid-rich oil. The process includes the steps of mixing a linoleic acid-rich oil with a catalytic amount of a transition metal to form an oil-catalyst mixture, and catalysis of the oil-catalyst mixture to produce the conjugated linoleic acid-rich oil. The process can also include the step of extracting the metal from the conjugated linoleic acid-rich oil, such as via filtration or centrifugation. The linoleic acid-rich oil can be a triacylglyceride vegetable oil, such as soy, sunflower, corn, cottonseed or peanut oil.

The catalysis step of the process can further include catalysis of the oil-catalyst mixture in low pressure conditions and high temperature conditions to produce the conjugated linoleic acid-rich oil. The oil-catalyst mixture can be catalyzed for up to approximately 192 minutes, such as between approximately 108 minutes and approximately 240 minutes, to produce the conjugated linoleic acid-rich oil. Further, the catalysis can be processed between approximately 1 mm Hg and approximately 2 mm Hg. Additionally, the catalysis can take place at temperature conditions between approximately 197 °C and approximately 282 °C, such as between approximately 210 °C and approximately 240 °C. Furthermore, the transition metal can be having a vacant 3d-orbital or a vacant 4d-orbital, such as ruthenium, rhodium, molybdenum, palladium ,gold, copper, iron, manganese, silver or nickel having a concentration between 0.21 % to approximately 8%, such as approximately 0.64% of a ruthenium catalyst or approximately 8% of a nickel catalyst.

In general, in a second aspect, the invention relates to a process for enriching a linoleic acid-rich vegetable oil by distilling the linoleic acid-rich vegetable oil in the presence of a transition metal catalyst to produce a conjugated linoleic acid-rich oil. The linoleic acid-rich oil can be a triacylglyceride vegetable oil, such as soy, sunflower, corn, cottonseed or peanut oil. The process can further include extracting the metal catalyst from the conjugated linoleic acid-rich oil, such as via filtration or centrifugation.

The distilling step of the process can further include vacuum steam distilling of the oil-catalyst mixture in low pressure conditions and high temperature conditions to produce the conjugated linoleic acid-rich oil. The linoleic acid-rich vegetable oil and transition metal catalyst can be distilled for up to approximately 240 minutes, such as between approximately 108 minutes and approximately 180 minutes. Further, the vacuum distilling distillation can be between approximately 1 mm Hg and approximately 2 mm Hg and at temperature conditions between approximately 197 °C and approximately 282 °C, such as between approximately 210 °C and approximately 240 °C. Furthermore, the transition metal can be having a vacant 3d-orbital or a vacant 4d-orbital, such as ruthenium, rhodium, molybdenum, palladium, gold, copper, iron, manganese, silver or nickel having a concentration between 0.21% to approximately 8%, such as approximately 0.64% of a ruthenium catalyst or approximately 8% of a nickel catalyst.

In general, in a third aspect, the invention relates to a conjugated linoleic acid-rich oil produced by the process described herein. The conjugated linoleic acid-rich oil can be enriched with up to approximately 21% conjugated linoleic acid. The linoleic acid-rich oil can be a triacylglyceride vegetable oil.

In general, in a fourth aspect, the invention relates to an enriched food product prepared using the conjugated linoleic acid-rich oil from the process described herein. The food product can include margarine, dressing or chips.

### BRIEF DESCRIPTION OF THE DRAWINGS

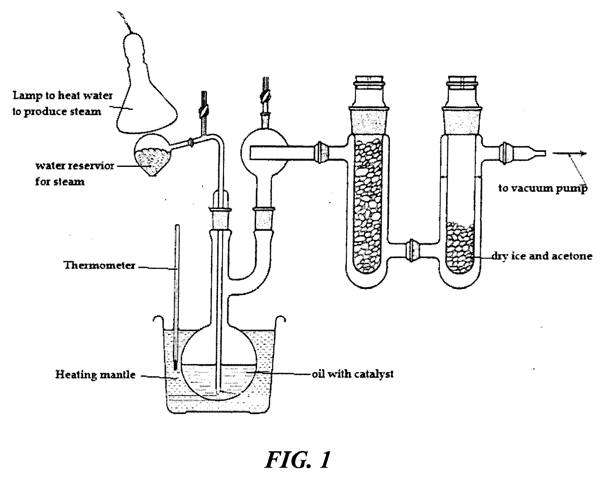

Figure 1 is a schematic diagram of an example of a deodorization process in an aspect of the CLA-rich vegetable oil production from linoleic rich oils by heterogeneous catalysis disclosed herein.

Other advantages and features of the invention will be apparent from the following description and from the claims.

### DETAILED DESCRIPTION OF THE INVENTION

The processes and systems discussed herein are merely illustrative of specific manners in which to make and use this invention and are not to be interpreted as limiting in scope.

While the processes and systems have been described with a certain degree of particularity, it is to be noted that many variations and modifications may be made in the details of the sequence and the arrangement of the processes and systems without departing from the scope of this disclosure. It is understood that the processes and systems are not limited to the embodiments set forth herein for purposes of exemplification.

The invention is generally directed to a heterogeneous catalytic vacuum distillation process that utilizes high temperature conditions to isomerize linoleic acid in triacylglyceride vegetable oils to CLA in order to produce CLA-rich oils. After processing, the catalyst may be removed by filtration or centrifugation to obtain high quality, CLA-rich oils. The heterogeneous catalysis utilizes a metal catalyst that can be selected from any suitable transition metal, such as ruthenium, rhodium, silver or nickel. The process is a two-phase system (oil/catalyst) using conditions with low pressure, between approximately 1 to 2 mm of Hg pressure, high temperature, above about 200 °C, and a continuous flow, such as at about 0.4 ml/min steam flow, to produce a 20% CLA-rich oil in less than 2 hours. The CLA-rich oils may then serve as a potent and bioactive nutraceutical. In addition, the CLA-rich oils can be incorporated into various food products, such as a CLA-rich dressing, margarine or chips.

### EXAMPLES

The CLA-rich vegetable oil production from linoleic rich oils by heterogeneous catalysis disclosed herein is further illustrated by the following examples, which are provided for the purpose of demonstration rather than limitation. Although soy oil was used in the following examples, any linoleic acid-rich oil can be used.

### EXAMPLE 1

Studies were conducted in duplicate to screen nickel, ruthenium, silver and rhodium catalysts for isomerization of linoleic acid to CLA. Rhodium on carbon with 5% loading (Sigma-Aldrich Product number: 206164), ruthenium (Sigma-Aldrich Product number: 206180), nickel on silica/alumina ∼65 wt. % loading (Sigma-Aldrich Product number: 208779). Silver powder instead of silver coated on carbon was used because silver is not commercially available coated on carbon or other support.

Catalyst concentrations and processing conditions are in Table 1 below. Duplicate samples of 250 mL of fully refined oil were processed for 90 minutes at their optimum temperature of each catalyst. Control experiments were also conducted using iodine (0.35%) and tocopherols (0.14%) catalysts dissolved in oil.

**Table 1: Commercial metal catalysts screening for CLA-rich oil production relative to production with iodine and mixed tocopherols.**

| | **Table 1** | **Conc. of catalyst (%)** | **Temp** | **Ratio** | **Total mean** | | **FFA(% as oleic)** |
|---|---|---|---|---|---|---|---|
| | **Treatments** | | **(°C)** | **(c,t:t,t)** | **CLA(%)** | **PV** | |
| **①** | **IODINE AND MT** | | | | | | |
| 1 | Iodine | 0.35 | 255 | 1.2 | 27.50±0.12 | 0.64 | 0.040 |

| **②** | **MIXED TOCOPHEROLS** | | | | | | |
|---|---|---|---|---|---|---|---|
| 2 | Mixed Tocopherols | 0.14 | 255 | 0.17 | 1.84±0.42 | 0.24 | 0.030 |
| 3 | Mixed Tocopherols | 1.40 | 255 | .006 | 1.813±0.32 | 0.32 | 0.032 |

| **③** | **RUTHENIUM** | | | | | | |
|---|---|---|---|---|---|---|---|
| 1 | Ruthenium on carbon(5% load) | 0.08 | 255 | 0.85 | 4.14±0.35 | 0..41 | 0.042 |
| 2 | Ruthenium on carbon (5% load) | 0.08 | 165 | 0.86 | 4.09±0.23 | 0.39 | 0.034 |
| 3 | Ruthenium on carbon(5% load)+ 0.14% MT | 0.08 | 165 | 1.51 | 5.21±0.44 | 0.34 | 0.032 |
| 4 | Ruthenium on carbon (5% load) | 0.32 | 165 | 3.03 | 10.52±0.86 | 0.38 | 0.041 |
| 5 | Ruthenium on carbon(5% load)+1400 MT | 0.32 | 165 | 2.80 | 9.043±0.62 | 0.32 | 0.032 |
| 6 | Ruthenium on carbon(5%load) | 0.48 | 165 | 2.73 | 13.78±0.81 | 0.55 | 0.04 |
| 7 | Ruthenium on carbon(5%load) | 0.64 | 165 | 2.18 | 14.972±0.83 | 0.62 | 0.042 |

| **④** | **RHODIUM** | | | | | | |
|---|---|---|---|---|---|---|---|
| 1 | Rhodium on carbon(5% load) | 0.015 | 200 | 0.17 | 2.37±0.30 | 0.52 | 0.032 |
| 2 | Rhodium on carbon(5% load) | 0.32 | 200 | 1.34 | 10.83±0.45 | 0.73 | 0.05 |

| **⑤** | **OTHERS** | | | | | | |
|---|---|---|---|---|---|---|---|
| 1 | Silver powder 1000 mesh(10 mic) | 1 | 200 | 0.007 | 1.46±0.25 | 0.36 | 0.021 |
| 2 | Nickel 400 mesh or 37 mic | 1 | 200 | 0.01 | 1.10±0.22 | 0.43 | 0.023 |
| 3 | Nickel (65% loading on carbon) | 1 | 200 | 0.24 | 1.831±0.32 | 0.50 | 0.035 |

Heterogeneous catalyzed oils were then filtered and oil fatty acid composition determined by GC fatty acid methyl ester analysis in duplicate. Oil quality was determined by measuring peroxide value and free fatty acid value in duplicate.

As the data in Table 1 illustrates, ruthenium and rhodium produced higher but statistically similar CLA levels at a concentration of 0.32% than other metal catalysts. Since rhodium is 10 times more expensive than ruthenium, ruthenium was selected as the most viable metal for CLA production by heterogeneous catalytic deodorization process. Ruthenium was further optimized as an economically viable conjugation catalyst, and preliminary screening showed that increasing the ruthenium catalyst concentration increases CLA yields. Around 15% CLA was produced at a catalyst level of 0.64% at 165 °C over 90 min.

Transition metals contain free and vacant d-orbitals, which can interact with pi-bonds of linoleic acid, and which are capable of activating a nearby C-H bond leading to bond migration. Such interaction destabilizes the native structure allowing the more stable CLA conjugated system to form and be released from the catalyst.

### EXAMPLE 2

To optimize conditions by a central composite rotatable experimental design using a Ruthenium catalyst (Ru loaded on carbon) was used with 5 levels of 3 variables (catalyst concentration, time, and temperature) (Table 2). The results of Example 1 were used to select the center point for experimental design to determine the effect of variables on CLA yields above and below the center point.

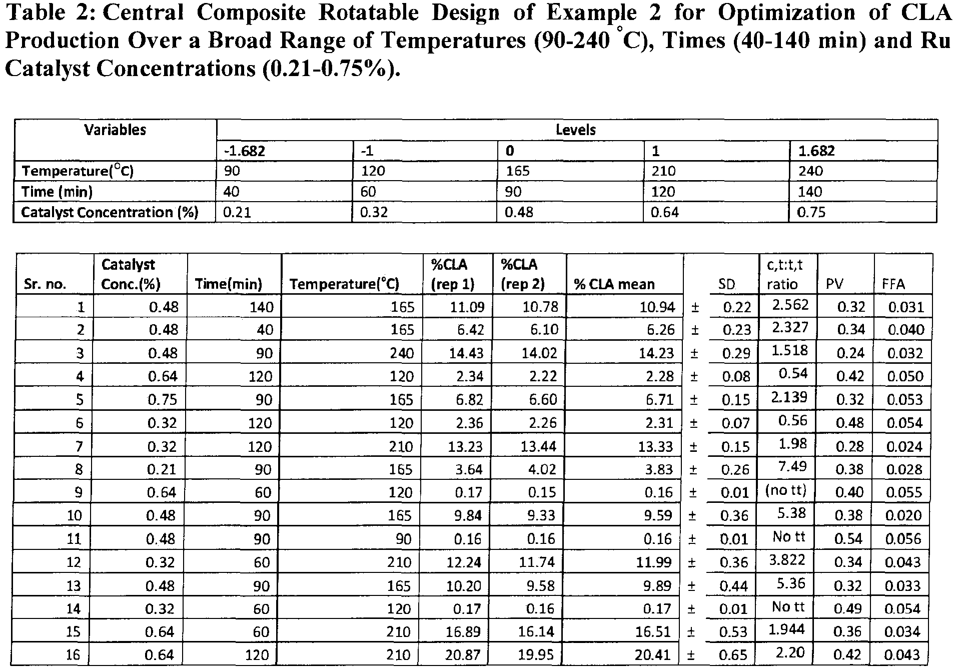

The ruthenium catalyst is on a carbon support consisting of a 19 microns particle with total surface area surface area of 900 m² per gram. The ruthenium catalyst has a surface area of 13 m² per gram and moisture content of <5% (Sigma-Aldrich Product number: 206180).

Two hundred and fifty milliliter samples were processed in duplicate for each set of processing conditions. Oils were then filtered and oil fatty acid composition determined by gas chromatography free fatty acid (FFA) methyl ester analysis in duplicate. Oil quality was determined by measuring the peroxide value (PV) and free fatty acid value in duplicate.

As the data in Table 2 illustrates, 0.64% ruthenium at 210 °C over 120 minutes produced 20% CLA-rich oil, which were the conditions that produced most CLA. Yields increased with temperature, time and catalyst concentration but time and temperature had the greatest effect on CLA yields.

### EXAMPLE 3

To further optimize the time and temperature conditions for a catalyst concentration fixed at 0.64% (ruthenium on carbon), a central composite rotatable design was utilized with 5 levels of 2 variables (time and temperature) (Table 3). The results of Example 2 were used to select the higher temperature and time settings for the experimental design to determine the effect of variables on CLA yields for time and temperature conditions over the ones used in Example 2. The objective of Example 3 was based on the hypothesis predicted by experimental design of Example 2 that higher temperatures and times would give greater CLA yields at a fixed catalyst concentration (0.64%), as further loading of the catalyst coated on carbon increased the viscosity of oil which would increase process cost and cause filtration problems.

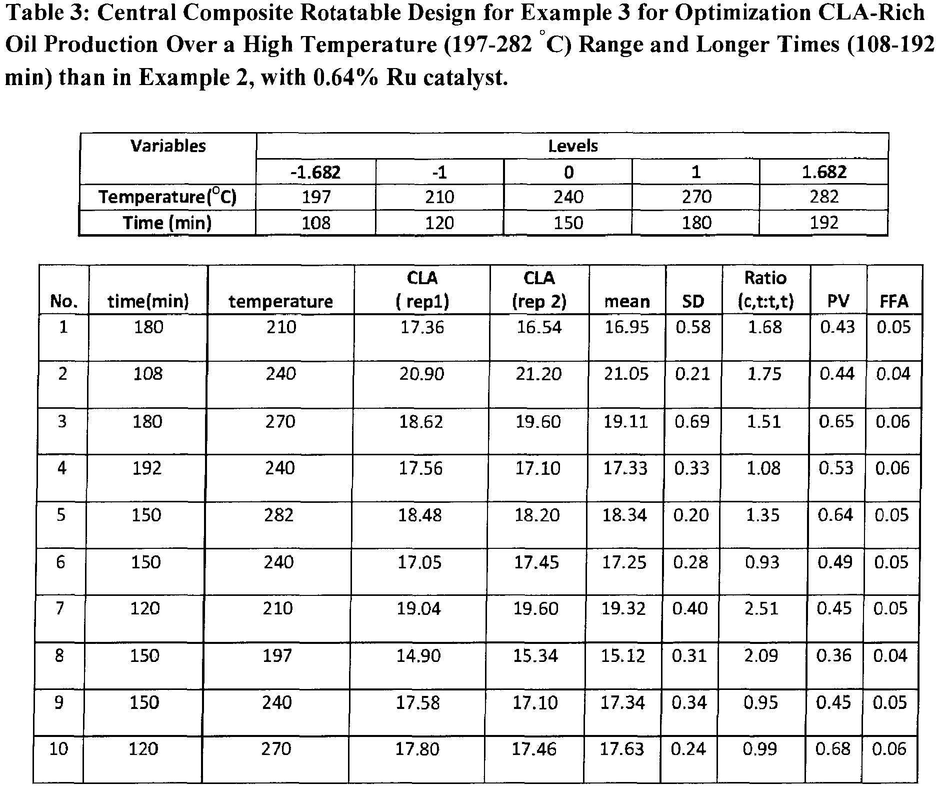

As the data in Table 3 illustrates, CLA yields at higher temperatures and longer times with 0.64% ruthenium catalyst resulted in less CLA produced relative to Example 2. A maximum of 21.05% CLA can be obtained at 240 °C. temperature for 108 min.

### EXAMPLE 4

An additional study was conducted to optimize conditions of a nickel catalyst for isomerization of linoleic acid to CLA using a central composite rotatable design similar to the preceding examples. The nickel catalyst was used on a silica/alumina (powder) with total surface area surface area of 190 m² per gram (Sigma Aldrich Product number: 208779). The nickel catalyst concentration was fixed at 8% with the time and temperature processing conditions listed below in Table 4.

**Table 4: Central Composite Rotatable Design of Example 4 for Optimization of CLA Production Over a Temperature Range (180-240 °C) and Times (180-240 min) with 8% Ni catalyst.**

| Time (min) | Temp (*C) | % CLA yield |
|---|---|---|
| 240 | 210 | 1.55 ± 1.06bc |
| 240 | 180 | 0.31 ± 0.19d |
| 210 | 210 | 0.49± 0.06cd |
| 180 | 210 | 0.71± 0.10cd |
| 180 | 240 | 4.70 ± 2.00a |
| 210 | 240 | 2.11 ± 0.22b |
| 240 | 240 | 1.96 ± 0.16b |
| 210 | 180 | 0.31 ± 0.21d |
| 210 | 210 | 0.73 ± 0.09cd |
| 180 | 180 | 0.28 0.18d |

As the data in Table 4 illustrates, 8% nickel at 240 °C over 180 minutes produced approximately 6.70% CLA-rich oil, which were the conditions that produced most CLA. Yields increased with temperature, time and catalyst concentration but time and temperature had the greatest effect on CLA yields. While the about 6.7% CLA yields from Example 4 using a nickel catalyst where lower than the around 21 % CLA yields from Example 3 that utilized a ruthenium catalyst, nickel is less expensive than ruthenium. Therefore nickel is also an economically viable catalyst with a high commercial potential for CLA production by a heterogeneous catalytic deodorization process.

In addition to the transition metals of ruthenium, rhodium, silver and nickel utilized in the foregoing non-limiting examples, the processes and systems to produce CLA-rich oils disclosed herein can be used with other inexpensive (comparative to nickel) transitional metal catalysts, such as copper, iron, and manganese having vacant 3d-orbitals. Moreover, more expensive transition metals (comparative to ruthenium), such as molybdenum, palladium and gold having vacant 4d-orbitals and larger atoms than nickel, can similarly be used as catalysts in the processes and systems to produce CLA-rich oils disclosed herein.

Whereas, the processes and systems have been described in relation to the drawings and claims, it should be understood that other and further modifications, apart from those shown or suggested herein, may be made within the scope of this invention.

## Claims

1. A process for producing conjugated linoleic acid-rich oil, said process comprising the steps of:
a. mixing a linoleic acid-rich oil with a catalytic amount of a transition metal to form an oil-catalyst mixture; and
b. catalysis of said oil-catalyst mixture to produce said conjugated linoleic acid-rich oil.

2. The process of Claim 1 further comprising the step of extracting said metal from said conjugated linoleic acid-rich oil.

3. The process of Claim 2 further comprising the step of extracting said metal from said conjugated linoleic acid-rich oil via filtration or centrifugation.

4. The process of Claim 1 wherein said linoleic acid-rich oil is a triacylglyceride vegetable oil.

5. The process of Claim 4 wherein said triacylglyceride vegetable oil is selected from the group consisting of soy, sunflower, corn, cottonseed or peanut oil.

6. The process of Claim 1 wherein said transition metal is selected from the group consisting of ruthenium, rhodium, silver or nickel.

7. The process of Claim 1 wherein said transition metal is ruthenium.

8. The process of Claim 1 wherein said catalysis step further comprises catalysis of said oil-catalyst mixture in low pressure conditions and high temperature conditions to produce said conjugated linoleic acid-rich oil.

9. The process of Claim 8 wherein said catalysis step further comprises catalysis of said oil-catalyst mixture in low pressure conditions and high temperature conditions for up to approximately 192 minutes to produce said conjugated linoleic acid-rich oil.

10. The process of Claim 9 wherein said catalysis step further comprises catalysis of said oil-catalyst mixture in low pressure conditions and high temperature conditions for between approximately 108 minutes and approximately 180 minutes to produce said conjugated linoleic acid-rich oil.

11. The process of Claim 8 wherein said low pressure further comprise pressure conditions between approximately 1 mm Hg and approximately 2 mm Hg.

12. The process of Claim 8 wherein said high temperature conditions further comprise temperature conditions between approximately 197 °C and approximately 282 °C.

13. The process of Claim 12 wherein said high temperature conditions are between approximately 210 °C and approximately 240 °C.

14. The process of Claim 1 wherein said catalysis step further comprises catalysis of said oil-catalyst mixture in pressure conditions between approximately 1 mm Hg and approximately 2 mm Hg and temperature conditions between approximately 197 °C and approximately 282 °C to produce said conjugated linoleic acid-rich oil.

15. The process of Claim 1 wherein said catalysis step further comprises heterogeneous catalysis via vacuum distillation of said oil-catalyst mixture in a continuous flow bath at a temperature range between approximately 197 °C and approximately 282 °C.

16. The process of Claim 1 wherein said catalysis step further comprises heterogeneous catalysis of said oil-catalyst mixture in a continuous flow bath at a temperature range between approximately 197 °C and approximately 282 °C and at a pressure range between 1 mm Hg and approximately 2 mm Hg.

17. The process of Claim 1 wherein said catalysis step further comprises a two-phase catalysis of said oil-catalyst mixture at a temperature range of between approximately 210 °C and approximately 240 °C and at a pressure range between 1 mm Hg and approximately 2 mm Hg to produce said conjugated linoleic acid-rich oil.

18. The process of Claim 17 wherein said catalytic amount of said transition metal comprises approximately 0.64% of said transition metal.

19. The process of Claim 1 wherein said catalytic amount of said transition metal comprises between 0.21 % to approximately 0.75% of said transition metal.

20. The process of Claim 19 wherein said catalytic amount of said transition metal further comprises approximately 0.64% of said transition metal.

21. The process of Claim 1 wherein said transition metal is a transition metal having a vacant 3d-orbital or a vacant 4d orbital.
